# EUROPÄISCHE PATENTANMELDUNG

(11) **EP 2 735 975 A1**
(43) Veröffentlichungstag der Anmeldung: **28.05.2014**
(21) Anmeldenummer: 12007957.9
(22) Anmeldetag: 26.11.2012
(51) Int. Cl.: G06F 17/30

(54) **System zur Hinterlegung und zum Abruf von Mediendaten**

(71) Anmelder: Lang, Jürgen, 51429 Bergisch Gladbach (DE)
(72) Erfinder: Lang, Jürgen, 51429 Bergisch Gladbach (DE)

(57) **Zusammenfassung**

Die Erfindung betrifft ein System zur Hinterlegung und zum Abruf von elektronischen Medien, wie z.B. Nachrichten, Werbung oder Gutscheinen. Die Hinterlegung der Mediendaten erfolgt durch einen Anbieter mittels einer Kommunikationsplattform in einem Datenspeicher und der Abruf der Mediendaten von dem Datenspeicher erfolgt seitens eines Nutzers durch Endgerät, wie beispielsweise ein Smartphone. Die Mediendaten können durch Scannen eines Codes gezielt und anonym abgerufen werden. Außerdem kann der Nutzer dem Anbieter in anonymer Weise Rückinformationen zu den abgerufenen Mediendaten, wie beispielsweise Ratings, liefern oder ein Abonnement weiterer Mediendaten bestellen ohne personenbezogene Daten preisgeben zu müssen.

## Beschreibung

### Technisches Gebiet

Die Erfindung betrifft ein System zur Hinterlegung und zum Abruf von elektronischen Medien, wie z.B. Nachrichten, Werbung oder Gutscheinen, wobei die Hinterlegung der Mediendaten in einem Datenspeicher durch einen Anbieter mittels einer Kommunikationsplattform erfolgt und der Abruf der Mediendaten von dem Datenspeicher seitens eines Nutzers durch ein Endgerät, wie beispielsweise ein PC oder ein Smartphone erfolgt.

Die Mediendaten können durch Scannen eines Codes gezielt abgerufen werden. Außerdem kann der Nutzer dem Anbieter in Rückinformationen zu den abgerufenen Mediendaten, wie beispielsweise Ratings, liefern oder ein Abonnement weiterer Mediendaten bestellen.

### Stand der Technik

Es ist bekannt, elektronische Medien vielfältiger Art über das Internet zu verbreiten bzw. über das Internet abrufbar zu halten. Ebenso bekannt sind internetbasierte Kommunikationsplattformen, mittels derer die Nutzer untereinander Mitteilungen austauschen können. Weiter ist es bekannt, solche Kommunikationsplattformen für Werbe- und Marketingzwecke einzusetzen. So ist es beispielsweise auch möglich, solche Plattformen dazu zu verwenden, den Nutzern solcher Plattformen Internet-Gutscheine über das Internet zugänglich zu machen.

Insbesondere ist es beispielsweise bekannt, Nutzer des Internets über E-Mail oder andere Push-Dienste auf elektronischem Weg mit Medien wie beispielsweise Newslettern oder Informationen zu Gutscheinaktionen zu versorgen. In diesem Fall muss der Medienanbieter oder ein vom Medienanbieter beauftragter Versender die E-Mail-Adressen (oder im Fall anderer Push-Dienste dazu äquivalente Adressen) der Empfänger kennen und verwalten. Zwar können Nutzer üblicherweise selbständig abonnieren, jedoch müssen sie auch auf diesem Wege ihre Identitätsinformation in Form von E-Mail-Adressen oder dazu äquivalente Adressen preisgeben. Somit ist es über diesen Weg unmöglich, elektronische Medien eines Medienanbieters auf anonyme Weise zu abonnieren.

Insbesondere bekannt sind auch sogenannte Soziale Netzwerke wie beispielsweise Facebook, LinkedIn oder XING. Bei solchen Netzwerken meldet sich der Nutzer einmalig mit persönlichen Daten, einschließlich der E-Mail-Adresse an und kann dann vielfältige Kommunikationsmöglichkeiten nutzen. Auch in solchen Sozialen Netzwerken können die Nutzer wie bei Newslettern auch gewisse Informationen abonnieren. Es ist aber im Allgemeinen auch hier nicht möglich, dabei gegenüber dem Medienanbieter beziehungsweise gegenüber dem Betreiber der Netzwerkplattform anonym zu bleiben.

Die Aufbringung von Kodierungen auf gedruckte Dokumente ist ebenfalls bekannt. So ist es zum Beispiel bekannt, QR-Codes als Verweiscodes einzusetzen, die eine URL enthalten und damit auf Inhalte verweisen, die im Internet bereitgestellt werden. Solche QR-Codes werden häufig in der Werbung eingesetzt, um Nutzern auf einfache Weise den Abruf von elektronischen Werbemedien eines Anbieters zu ermöglichen. Besonders häufig werden QR-Codes von Smartphone-Nutzern genutzt, da sie einen deutlich bequemeren Zugang zu Internet-Inhalten bieten, als das durch Eintippen einer möglicherweise sehr langen URL auf der virtuellen Tastatur eines Smartphones möglich wäre.

### Aufgabe

Es stellt sich die Aufgabe, eine Möglichkeit für Medienanbieter und Mediennutzer zu schaffen, mit der die Nutzer die von den Anbietern bereitgestellten Medien gezielt und anonym abrufen können und mit der sie in ebenso anonymer Weise Rückinformationen zu den abgerufenen Medien, wie beispielsweise Ratings, liefern können. Eine weitere Aufgabe besteht darin, den Nutzern die Möglichkeit zu geben, ein Abonnement weiterer Medien zu bestellen, ohne dem Anbieter gegenüber personenbezogene Daten preisgeben zu müssen.

### Lösung

Die Aufgabe wird durch ein System nach Anspruch 1, also einem System bestehend aus einer Kommunikationsplattform und mindestens einem Endgerät, um Mediendaten über ein Medien-Eingabemodul in einem Datenspeicher zu hinterlegen und mittels Endgerät von diesem Datenspeicher anonym abzurufen gelöst, wobei die Kommunikationsplattform zumindest ein Druckmodul umfasst, mit dem ein Dokument gedruckt werden kann, das einen maschinenlesbaren Code enthält, der einen Datenspeicherort der Mediendaten im Datenspeicher enthält, wobei das Endgerät einen Scanner umfasst, mit dem der maschinenlesbare Code gelesen werden kann, wobei das Endgerät ferner ein Datenverarbeitungsmodul umfasst, mit dem der Inhalt des Codes ausgewertet und somit die Speicherortinformation ermittelt werden kann, wobei das Endgerät ferner eine Abrufeinheit umfasst, mit der auf Basis der im Code enthaltenen Speicherortinformationen die an diesem Speicherort im Datenspeicher hinterlegten Mediendaten abgerufen werden können, dadurch gekennzeichnet, dass das Endgerät weiter eine Sendeeinheit umfasst und dass die Sendeeinheit und der Datenspeicher so konfiguriert sind, dass Rückinformationen von einem Nutzer eines Endgeräts über die Sendeeinheit an den Datenspeicher übertragen werden können.

### Vorteile des vorgestellten Systems

Das erfindungsgemäße System erlaubt den Nutzern nicht nur den anonymen Abruf von Mediendaten, sondern bietet zudem die Möglichkeit, dem Anbieter der Medien Rückinformationen zu liefern, ohne sich dafür gegenüber dem Anbieter identifizieren zu müssen, wie es z.B. bei Sozialen Netzwerken notwendig ist.

Außerdem können mit dem vorgestellten System Medieninhalte regelmäßig an viele Nutzer verbreitet werden, wobei der Anbieter keine Kenntnis über die elektronische Adressierung der Nutzer haben muss und wobei die Nutzer anonym bleiben können. Statt einer Adressierung durch den Absender abonniert sich jeder Nutzer eigenständig zum Nutzerkreis der vom Anbieter bereitgestellten Mediendaten durch Einscannen des Codes und durch anonyme Einwilligung in kontinuierlichen Bezug (Abonnement) durch entsprechende Rückinformation im Zusammenhang mit einem durch einen Code initiierten Medienabruf.

### Detaillierte Beschreibung der Erfindung

Die Erfindung umfasst zwei unterschiedlich strukturierte Teilsysteme, nämlich zum einen eine Kommunikationsplattform, mit der Mediendaten in einem Datenspeicher hinterlegt werden, und ein Dokument mit einem maschinenlesbaren Code (z.B. QR-Code) gedruckt wird. Dieses System wird von einem Anbieter von Mediendaten (A) (bzw. von mehreren Anbietern von Mediendaten) verwendet.

Andererseits umfasst die Erfindung ein Endgerät, das von einem Nutzer (B) dazu verwendet wird, mittels des maschinenlesbaren Codes auf dem Dokument gezielt und anonym von einem Anbieter (A) hinterlegte Mediendaten aus dem Datenspeicher abzurufen, dem Anbieter entsprechende Rückinformationen zu hinterlassen, oder weitere Medien anonym zu abonnieren.

Es versteht sich, dass normalerweise mehrere Nutzer den gleichen Code scannen und Mediendaten abrufen (können). Insoweit die Erfindung im Folgenden der Einfachheit halber mit nur einem einzigen Nutzer beschrieben wird, ist dies nicht als einschränkend zu verstehen.

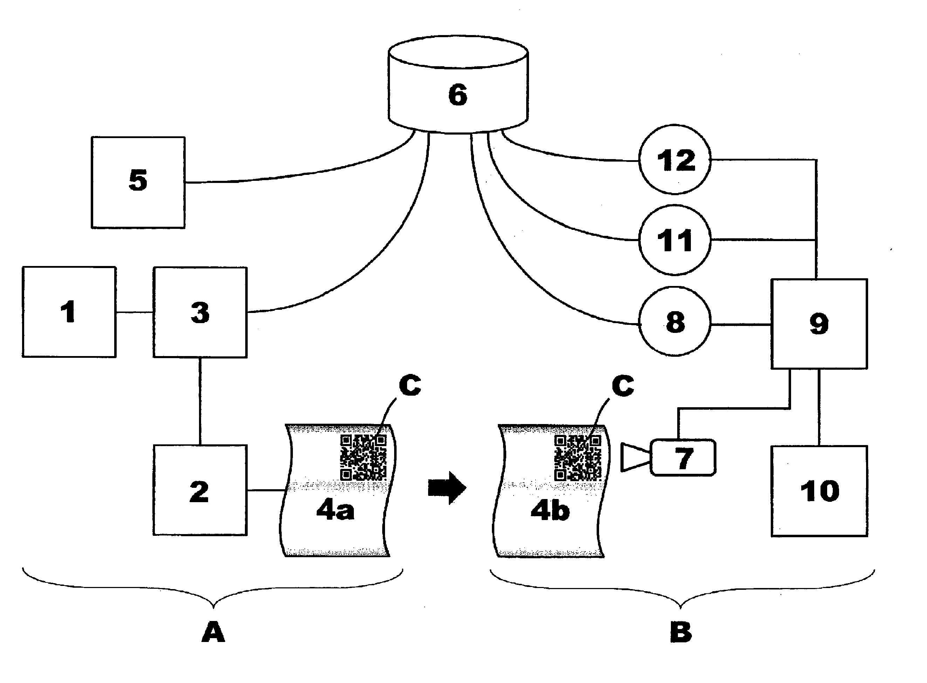

Im Folgenden werden ein Ausführungsbeispiel der Erfindung und seine Verwendung anhand der anliegenden Zeichnung erläutert. Die Fig.1 zeigt in schematischer Darstellung ein erfindungsgemäßes System.

### Kommunikationsplattform(Verwendung durch Anbieter)

Beim Anbieter (A) werden Mediendaten über ein Medien-Eingabemodul (1) und ein Datenaufbereftungsmodul (3) in einem Datenspeicher (6) hinterlegt.

Bei den Mediendaten kann es sich um verschiedene Medientypen handeln, insbesondere unterschiedlich formatierte Schriften auf unterschiedlich gestalteten Hintergründen, strukturierte Eingabefelder, eingebettete Fotos, eingebettete Audio-Dateien und eingebettete Video-Dateien und Kombinationen hieraus.

Das Datenaufbereitungsmodul (3) gibt dem Anbieter (A) die Möglichkeit der Vorschau und Änderung der Daten, bevor diese im Datenspeicher (6) abgelegt werden.

Das Datenautbereitungsmodul ermöglicht außerdem, über ein Druckmodul (2) den Ausdruck von Dokumenten mit enthaltenem Code (C). In diesem Druckmodul (2) sind die Vorbereitung auf den Ausdruck und der eigentliche Druckvorgang selbst zusammengefasst. Üblicherweise erfolgt eine Übersetzung in eine vom Drucksystem verständliche Beschreibungssprache.

Ebenfalls kann die Hinzuziehung von typischem Druckinhalt erfolgen, wie z.B. die Ergänzung um ein Logo oder eine stets gleichartige Fußzeile von Briefen. Die Druck-Aufbereitung mündet entweder in einen physischen Druck oder in eine elektronische Ausgabe des Abbilds eines Dokuments, z.B. in Form einer PDF-Datei oder einer elektronischen Grafik.

Die Inhalte des Codes (C) werden vom Datenaufbereitungsmodul (3) bestimmt. Hierzu kann das Datenaufbereitungsmodul (3) zum einen eigene Datenaufbereitungen vornehmen. Zum anderen wird die Datenaufbereitung dadurch beeinflusst, dass das Datenaufbereitungsmodul aufbereitete Daten des zu druckenden Dokuments an einen Datenspeicher (6) übergibt und dass der Datenspeicher (5) Ergebnisdaten der Speicherung an die Datenaufbereitung (3) über den Kommunikationsweg der Sendeeinheit (5) zurückgibt.

Der gedruckte Code (C) umfasst Speicherortinformationen der im Datenspeicher (6) gespeicherten Daten. Es versteht sich, dass darüber hinaus weitere Daten im Code (C) enthalten sein können.

Bei den sonstigen Daten, die im Code (C) enthalten sein können, kann es sich beispielsweise im Falle einer Verschlüsselung der Mediendaten um Hinweise zur Entschlüsselung, vorzugsweise den Schlüssel selbst handeln. Außerdem kann der Code (C) im Fall der Durchführung eines digitalen Fingerabdrucks oder einer elektronischen Signatur diesen Fingerabdruck bzw. diese Signatur oder definierte Teile hiervon enthalten. Außerdem kann der Code (C) im Falle einer elektronischen Signatur Hinweise auf die Signaturprüfung, vorzugsweise ein Zertifikat, einen öffentlichen Schlüssel oder Verweise darauf enthalten. Außerdem kann der Code (C) ggf. weitere Authentisierungsinformationen für den späteren Datenabruf am Datenspeicher (6) enthalten.

Als Ergebnis des beschriebenen Verfahrens beim Anbieter (A) zum Medienupload liegt zum einen ein Dokument vor (4a), das einen Code (C) umfasst. Dieses Dokument kann als physischer Druck vorliegen. Es kann auch als elektronische Ausgabe des Abbilds eines Dokuments, z.B. in Form einer PDF-Datei oder einer elektronischen Grafik vorliegen. Zum anderen sind die Mediendaten im Datenspeicher (6) abgelegt.

### Endgerät (Verwendung durch Nutzer)

Beim Nutzer (B) eines erfindungsgemäßen Endgeräts liegt das gedruckte oder elektronische Dokument (4b) vor. Dabei kommt es nicht darauf an, ob das gedruckte Dokument etwa als Brief oder E-Mail eintrifft oder als Ausdruck zur Verfügung steht. Vorzugsweise liegt das Dokument als gedruckter Gutschein vor, der öffentlich verteilt oder ausgehängt wird.

Das vorliegende Dokument (4b) entspricht weitgehend dem einst gedruckten Dokument (4a). Etwaige Veränderungen im Dokument wie handschriftliche oder drucktechnische Ergänzungen, Stempelungen oder Veränderung von Druck und/oder Papier durch Alterung oder mechanische Einwirkungen sind dabei weitestgehend unerheblich. Relevant ist lediglich, dass der maschinenlesbare Code (C) weiterhin lesbar ist.

Im Stand der Technik sind Symbologien und Verfahren lange bekannt, die solche Redundanzen und Fehlerkorrekturmechanismen im Code (C) bereitstellen, dass zum einen von einer vollständigen maschinellen Lesbarkeit und darüber hinaus von einer Identität des Dateninhalts des Codes (C) auf dem gedruckten Dokument (4a) und dem später vorliegenden Dokument (4b) ausgegangen werden kann. Dies gilt z.B. für normgerechte QR-Codes, Data Matrix Codes, Aztec Codes und für eine Vielzahl weiterer Matrixcodes.

Bei vorliegendem Druckdokument (4b) wird der Code (C) mittels eines Scanners (7) ausgelesen. Dazu kann ein handelsüblicher kamerabasierter Scanner verwendet werden. Insbesondere kann ein entsprechend programmiertes Smartphone als Scanner verwendet werden. Es können aber auch andere Scan-Technologien wie z.B. Rasterscanner eingesetzt werden. Das Auslesen des Codes (C) beinhaltet seine Auswertung, so dass der Scanner (7) an das Datenverarbeitungsmodul (9) den elektronischen Inhalt des Codes (C) übermittelt. Der elektronische Inhalt des Codes (C) liegt anschließend in korrekter Form vor, wobei regelmäßig davon ausgegangen werden kann, dass dieser Inhalt identisch ist mit dem Inhalt, der vom Druckmodul (2) auf den Code (C) des Dokuments aufgedruckt wurde.

Das Datenverarbeitungsmodul (9) wertet den Inhalt des Codes (C) aus. Bei dieser Auswertung ermittelt das Datenverarbeitungsmodul die im Code (C) enthaltene Speicherortinformation sowie ggf. einen Hinweis auf die Datenentschlüsselung sowie ggf. den digitalen Fingerabdruck oder die elektronische Signatur.

Das Datenverarbeitungsmodul (9) ruft auf Basis der im Code (C) enthaltenen Speicherortinformation und der ggf. enthaltenen Authentisierungsinformation unter Nutzung einer Abrufeinheit (8) Daten von einem Datenspeicher (6) ab. Nach diesem Abruf liegen die zuvor im Datenspeicher (6) gespeicherten Daten als Kopie im Datenverarbeitungsmodul (9) vor. Die Daten können dem Nutzer (B) im Medien-Präsentationsmodul (10) präsentiert bzw. angezeigt werden.

Auf Basis der Medienpräsentation kann der Nutzer (B) dem Anbieter (A) Rückinformationen zur Kenntnis geben. Hierbei handelt es sich vorzugsweise um Wertungen des Inhalts (sog. Rating) oder strukturierte Rückinformationen, wie z.B. vom Nutzer (B) eingegebene oder selektierte Informationen. Diese Rückinformationen werden über eine Sendeeinheit (12) an den Datenspeicher (6) übertragen und können zeitlich unabhängig vom Anbieter (A) über ein Datendarstellungsmodul (5) detailliert oder konsolidiert eingesehen und weiter verarbeitet werden.

Mit dem Abruf der Mediendaten kann der Nutzer (B) im Datenspeicher (6) die Information hinterlassen, dass er zukünftig weitere Mediendaten vom Anbieter (A) erhalten möchte. Diese Funktion wird "Abonnement" genannt.

Im Falle eines vorliegenden Abonnements werden zukünftige Mediendaten, die der Anbieter (A) im Datenspeicher zur Verfügung stellt, dem Nutzer auch ohne nochmaliges Scannen von Codes (C) mittels der Empfangseinheit (11) unter Zuhilfenahme der Datenverarbeitungseinheit (9) und des Medien-Präsentationsmoduls (10) zur Verfügung gestellt.

Scanner (7), Datenverarbeitungsmodul (9), Abrufeinheit (8), Empfangseinheit (11), Sendeeinheit (12) und Medien-Präsentationsmodul (10) sind vorzugsweise in einem mobilen Gerät (z.B. in einem Smartphone) zusammengefasst.

Es versteht sich, dass ein Code (C) üblicherweise von mehreren unterschiedlichen Nutzern (B) unabhängig voneinander gescannt wird. Die zugehörigen Mediendaten werden daher mehrfach von unterschiedlichen Nutzern aus dem Datenspeicher (6) abgerufen.

Im Folgenden wird die Nutzung des Systems beispielhaft an einem praktischen Anwendungsfall erläutert.

### Beispielhafte Nutzung des Systems

Ein Restaurantbesitzer (A) möchte mit einem Gutschein auf eigene Leistungen aufmerksam machen und erstellt hierzu geeignete Medieninhalte (z.B. "Schnitzel Montags zum halben Preis"). Die Medieninhalte werden im Datenspeicher (6) hinterlegt.

Der Restaurantbesitzer druckt einen Gutschein aus, der einen "Couponcode" (C) enthält. Diesen Gutschein hängt er werbewirksam im eigenen Schaufenster aus.

Interessenten (B), die diesen Gutschein sehen, benutzen ihr Smartphone mit einer speziellen erfindungsgemäßen App. Diese App ermöglicht (durch Zusammenfassen von Scanner 7, Datenaufbereitung 9, Medien-Präsentation 10, Abrufeinheit 8, Empfangseinheit 11 und Sendeeinheit 12) das Scannen des Codes, woraufhin die zugehörigen Mediendaten in Form eines Gutscheins unmittelbar auf die App geladen und angezeigt werden.

Gleichzeitig abonniert der Nutzer zukünftige Nachrichten und Gutscheine dieses Restaurants. Hierdurch kann das Restaurant diesen Kommunikationsweg analog zu dem eines Newsletters nutzen.

Der Nutzer hat die Möglichkeit einer Bewertung des Gutscheins und einer anonymen Rückmeldung an den Anbieter.

Der Anbieter hat über die Datendarstellung (5) die Möglichkeit festzustellen, wie viele Nutzer den Gutschein geladen haben und welche Rückmeldungen bzw. Wertungen die Nutzer vorgenommen haben.

## Patentansprüche

1. System bestehend aus einer Kommunikationsplattform und mindestens einem Endgerät, um Mediendaten über ein Medien-Eingabemodul in einem Datenspeicher (6) zu hinterlegen und mittels Endgerät von diesem Datenspeicher anonym abzurufen, wobei die Kommunikationsplattform zumindest ein Druckmodul (2) umfasst, mit dem ein Dokument gedruckt werden kann, das einen maschinenlesbaren Code (C) enthält, der einen Datenspeicherort der Mediendaten im Datenspeicher (6) enthält, wobei das Endgerät einen Scanner (7) umfasst, mit dem der maschinenlesbare Code (C) gelesen werden kann, wobei das Endgerät ferner ein Datenverarbeitungsmodul (9) umfasst, mit dem der Inhalt des Codes (C) ausgewertet und somit die Speicherortinformation ermittelt werden kann, wobei das Endgerät ferner eine Abrufeinheit (8) umfasst, mit der auf Basis der im Code (C) enthaltenen Speicherortinformationen die an diesem Speicherort im Datenspeicher (6) hinterlegten Mediendaten abgerufen werden können
**dadurch gekennzeichnet, dass**
das Endgerät weiter eine Sendeeinheit (12) umfasst und dass die Sendeeinheit (12) und der Datenspeicher (6) so konfiguriert sind, dass Rückinformationen von einem Nutzer eines Endgeräts über die Sendeeinheit (12) an den Datenspeicher (6) übertragen werden können.

2. System nach Anspruch 1,
**dadurch gekennzeichnet, dass**
die Kommunikationsplattform weiter ein Datendarstellungsmodul (5) umfasst, das so konfiguriert ist, dass die Rückinformationen über das Datendarstellungsmodul eingesehen oder weiter verarbeitet werden können.

3. System nach einem der Ansprüche 1 oder 2,
**dadurch gekennzeichnet, dass**
das Endgerät weiter eine Empfangseinheit (11) umfasst und dass die Sendeeinheit (12), die Empfangseinheit (11) und der Datenspeicher (6) so konfiguriert sind, dass ein Nutzer eines Endgerätes mit Abruf der Mediendaten im Datenspeicher die Rückinformation hinterlassen kann, zukünftig weitere Mediendaten erhalten zu wollen , worauf zukünftig im Datenspeicher (6) bereitgestellte Mediendaten ohne nochmaliges Scannen des Codes (C) mittels der Empfangseinheit (11) am Endgerät zur Verfügung gestellt werden können.

4. System nach einem der Ansprüche 1 bis 3,
**dadurch gekennzeichnet, dass**
die Kommunikationsplattform weiter ein Datenaufbereitungsmodul (3) umfasst, das dem Anbieter die Möglichkeit der Vorschau und Änderung der Mediendaten gibt, bevor diese Daten im Datenspeicher (6) abgelegt werden.

5. System nach einem der Ansprüche 1 bis 4,
**dadurch gekennzeichnet, dass**
das Endgerät weiter ein Medien-Präsentationsmodul (10) umfasst, mit dem die vom Datenspeicher (6) abgerufenen Mediendaten einem Nutzer des Endgeräts präsentiert, bzw. angezeigt werden können.

6. System nach einem der Ansprüche 1 bis 5,
**dadurch gekennzeichnet, dass**
das Endgerät ein mobiles Gerät, vorzugsweise ein Smartphone ist.

7. Gedrucktes Dokument, das einen maschinenlesbaren Code (C) enthält, der einen Datenspeicherort der Mediendaten im Datenspeicher (6) enthält, erhältlich durch den Druck des Druckmoduls (2) des Systems nach den Ansprüchen 1 bis 6.

8. Computerprogramm, das die Funktionalität der Kommunikationsplattform des Systems nach den Ansprüchen 1 bis 6 implementiert, wenn es in einer Datenverarbeitungsanlage abläuft.

9. Computerprogramm, das die Funktionalität des Endgeräts des Systems nach den Ansprüchen 1 bis 6 implementiert, wenn es auf einem programmierbaren vorzugsweise mobilen Gerät abläuft.
